# NEW EUROPEAN PATENT SPECIFICATION

(11) **EP 2 244 211 B2**
(45) Date of publication and mention of the opposition decision: **11.10.2017**
(45) Mention of the grant of the patent: 08.10.2014
(21) Application number: 08700798.5
(22) Date of filing: 18.01.2008
(51) Int. Cl.: G06K 19/077

(54) **MANUFACTURING METHOD OF A RADIO FREQUENCY IDENTIFICATION DEVICE**
HERSTELLUNGSVERFAHREN EINER HOCHFREQUENZIDENTIFIKATIONSVORRICHTUNG
PROCÉDÉ POUR LA PRODUCTION D'UN APPAREIL D'IDENTIFICATION PAR RADIOFRÉQUENCE

(43) Date of publication of application: 27.10.2010
(73) Proprietor: Beijing Golden Spring Internet of Things Inc., Economic-Technological Development Area Beijing 100176 (CN)
(72) Inventor: ZHANG, Xiaodong, Beijing 100176 (CN)
(74) Representative: Gulde & Partner
(86) International application number: PCT/CN2008/070141
(87) International publication number: WO 2009/089691

(56) References cited:
- EP-A2- 1 703 448
- CN-A- 101 256 637
- DE-U1-202007 013 680
- US-A1- 2004 125 040
- US-A1- 2007 056 683
- US-A1- 2007 221 738
- US-A1- 2008 003 713

## Description

### Technical Field

The invention relates to a radio frequency identification device and manufacturing method.

### Background Technology

The radio frequency identification device is usually used cooperatively with a card reader. The prior radio frequency identification device is that a module and a lead coil are arranged on a same substrate; therefore, the lead coil can be fixed only after the module and the substrate are fixed. Because the serial production is adopted, low production efficiency and increasing production cost are caused by the operating method. In addition, the most expensive element in the radio frequency identification device is the module, but in the prior manufacturing technique, the module is fixed with the substrate first and the follow-up work is carried out, therefore, it's impossible to pre-store production capacity with the method of storing semi-finished products without inputting a great amount of funds. US-A-2008/003713 is acknowledged in the preamble of claim 1.

### SUMMARY OF THE INVENTION

The purpose of the invention is to provide a manufacturing method.

The steps of the manufacturing method of the radio frequency identification device of the invention of claim 1 are as follows:
1. An entire module bearing substrate and an entire lead bearing substrate are prepared respectively;
2. Multiple lead coils are set on the entire lead bearing substrate according to the setting positions;
3. Multiple modules are set on the entire module bearing substrate according to the setting positions;
4. Connect one surface of the entire lead bearing substrate with one surface of the entire module bearing substrate according to the setting position;
5. Each lead coil is electrically connected with corresponding module.

The manufacturing method of the radio frequency identification device of the invention, wherein the step 1 also includes arranging multiple vacant areas on the entire module bearing substrate according to the setting positions, as well as arranging multiple cavities on the entire lead bearing substrate according to the setting positions; multiple lead coils in the step 2 are arranged on the lower surface or upper surface of the entire lead bearing substrate respectively; each module in the step 3 comprises of a chip and a lead frame, each chip is fixed on the lead frame, and each chip is arranged in the vacant area of the entire module bearing substrate respectively; each lead frame is arranged in the cavity respectively, the perimeter of lower surface of each lead frame is connected with the upper surface of the entire module bearing substrate through adhesive joining; the lower surface of the entire lead bearing substrate is connected with the upper surface of the entire module bearing substrate by adopting heat pressing or adhesive joining or locating plunger or ultrasonic welding in the step 4.

The manufacturing method of the radio frequency identification device of the invention, wherein the method of setting lead coil in the step 3 is to bond multiple pre-winded copper conductor coils on the entire lead bearing substrate through adhesive joining respectively, the electric connecting method adopted in the step 5 is electric resistance welding or braze welding.

The manufacturing method of the radio frequency identification device of the invention, the step 1 also includes of arranging multiple cavities on the entire lead bearing substrate according to the setting positions; multiple lead coils in the step 2 are embedded on the lower surface or upper surface of the entire lead bearing substrate respectively; multiple modules in the step 3 are arranged in the cavities on the entire lead bearing substrate respectively, the lower surfaces of the lead frames of the plurality of modules are bonded and connected with the upper surface of the entire module bearing substrate respectively; in the step 4, the lower surface of the entire lead bearing substrate is connected with the upper surface of the entire module bearing substrate by adopting heat pressing or adhesive joining or locating plunger or ultrasonic welding.

The modules mentioned in the manufacturing method of the radio frequency identification device in this invention are FCP modules.

The manufacturing method of the radio frequency identification device of the invention, wherein the step 1 also includes arranging multiple vacant areas on the entire module bearing substrate according to the setting positions, as well as arranging multiple cavities on the entire lead bearing substrate according to the setting positions; multiple lead coils in the step 2 are arranged on the lower surface or upper surface of the entire lead bearing substrate respectively; each module in the step 3 comprises of a chip and a lead frame, each chip is fixed on the lead frame, and each lead frame is arranged in the vacant area of the entire module bearing substrate respectively, and each chip is arranged in the cavity respectively; then bond the lower surface of each lead frame with the lower surface of the entire module bearing substrate through adhesive strip; the lower surface of the entire lead bearing substrate is connected with the upper surface of the entire module substrate by adopting heat pressing or adhesive joining or locating plunger or ultrasonic welding in the step 4.

The manufacturing method of the radio frequency identification device of the invention, wherein the method of setting lead coil in the step 3 is to bond multiple pre-winded copper conductor coils on the entire lead bearing substrate through adhesive joining respectively, the electric connecting method adopted in the step 5 is electric resistance welding or braze welding.

The manufacturing method of the radio frequency identification device of the invention, wherein the method of setting multiple lead coils in the step 3 is to arrange copper wires in the entire lead bearing substrate by adopting ultrasonic welding respectively; the vacant areas of the mentioned lead bearing substrate are filled with UV adhesive or the hot melt adhesive or the thermosetting adhesive.

Compared with the existing radio frequency identification device and its manufacturing method, the manufacturing method of the radio frequency identification device of this invention and the device of this invention creatively adopts two types of substrates, namely the module bearing substrate and lead bearing substrate, and creatively arranged modules on the module bearing substrate and lead coil on the lead bearing substrate respectively; therefore, the setting work of module and lead coil can be carried out simultaneously; or the setting work of lead coil which takes a long time and comprises of low cost elements can be carried out in advance only by investing a few funds; then the setting work of module is carried out according to the client's order in time, and the radio frequency identification device is assembled, thus the radio frequency identification device needed by client can be produced rapidly when an order appears. The radio frequency identification device and manufacturing method of the invention has the advantages that the production efficiency can be improved greatly and the production cost can be decreased obviously; the technical proposal has outstanding substantial feature and obvious progress.

Other details and features of the radio frequency identification device and manufacturing method of the invention can be known well by reading the following passage and combining the illustrated examples and Figures.

### BRIEF DESCRIPTION OF THE DRAWINGS

FIG.1 is a front view of the schematic diagram of implementation way of the radio frequency identification device in accordance with an embodiment of the present invention;
FIG.2 is a front view of the schematic diagram of another implementation way of the radio frequency identification device;
FIG.3 is a front view of the schematic diagram of the third implementation way of the radio frequency identification device;
FIG.4 is a stereogram of structural diagram of the radio frequency identification device in accordance with an embodiment of the present invention;
FIG.5 is a front view of the schematic diagram of the fourth implementation way of the radio frequency identification device in accordance with an embodiment of the present invention;
FIG.6 is a front view of the schematic diagram of the fifth implementation way of the radio frequency identification device;
FIG.7 is a front view of the schematic diagram of the sixth implementation way of the radio frequency identification device;
FIG.8 is a front view of the schematic diagram of the seventh implementation way of the radio frequency identification device in accordance with an embodiment of the present invention;
FIG.9 is a front view of the schematic diagram of the eighth implementation way of the radio frequency identification device in accordance with an embodiment of the present invention;

### DETAILED DESCRIPTION OF THE PRESENT INVENTION

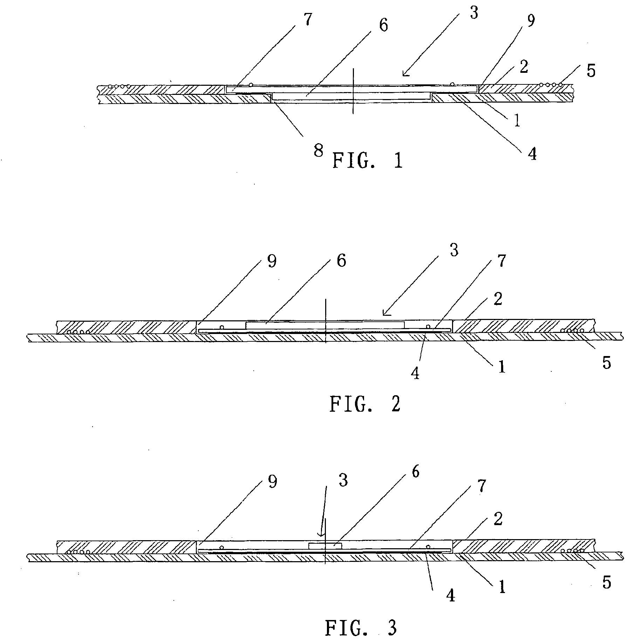

The exemplary embodiments of figures 2, 3, 6 and 7 are not part of, but useful for the understanding of the invention as claimed.

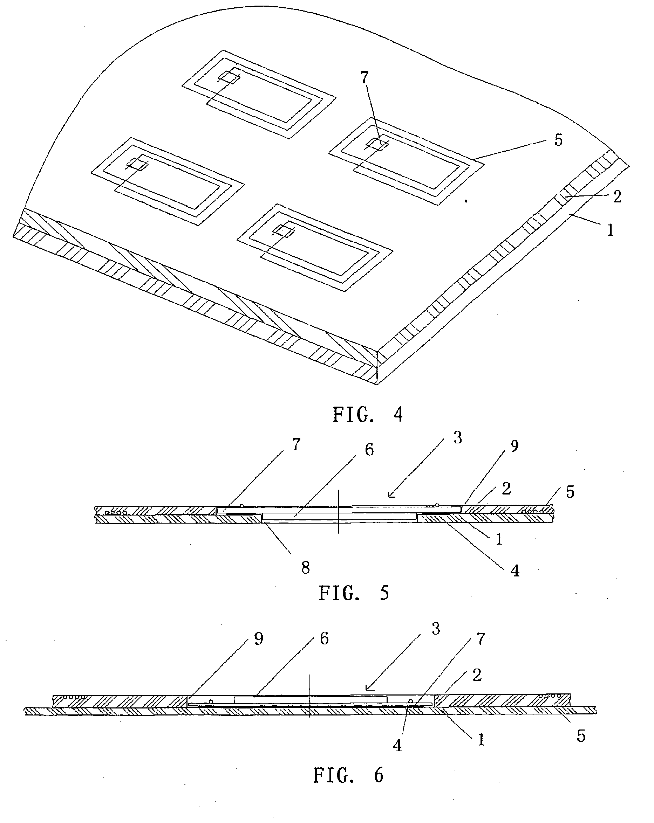

As shown in the FIG.1 and FIG. 4, the radio frequency identification device of the invention comprises of module bearing substrate 1 and lead bearing substrate 2; the module 3 which comprises of chip 6 and lead frame 7 is arranged on the module bearing substrate 1; the chip 6 is fixed on the middle part of the lower surface of lead frame 7, and the chip 6 is arranged in the vacant area 8 in the middle of module bearing substrate 1; the perimeter of the lower surface of the lead frame 7 is bonded and connected with the upper surface of the module bearing substrate 1 through an adhesive layer 4; lead coil 5 is arranged on the lead bearing substrate 2; the lead coil 5 is arranged on the upper surface of lead bearing substrate 2; the lead coil 5 can also be arranged on the lower surface of lead bearing substrate 2 as shown in the FIG. 5; cavity 9 is arranged on the lead bearing substrate 2, the lead frame 7 is in the cavity 9; the lower surface of lead bearing substrate 2 is connected with the upper surface of module bearing substrate 1 by adopting heat pressing or adhesive joining, or the locating plunger to fix and connected the lead bearing substrate 2 and the module bearing substrate 1, the lead coil 5 is electrically connected with the module 3.

As shown in the FIG. 2, the radio frequency identification device comprises of module bearing substrate 1 and lead bearing substrate 2; module 3 which comprises of chip 6 and lead frame 7 is arranged on the module bearing substrate 1; the chip 6 is fixed on the upper surface of lead frame 7, the lower surface of the lead frame 7 is bonded and connected with the upper surface of the module bearing substrate 1 through an adhesive layer 4; the lead coil 5 is arranged on the lower surface of lead bearing substrate 2; the lead coil 5 can also be arranged on the upper surface of lead bearing substrate 2 as shown in the FIG. 6; the chip 6 and the lead frame 7 are in the cavity 9 on the lead bearing substrate 2; the lower surface of lead bearing substrate 2 is connected with and sticks the upper surface of module bearing substrate 1 by adopting heat pressing or adhesive joining, or use the locating plunger to fix and connected the lead bearing substrate 2 and the module bearing substrate 1. The lead coil 5 is electrically connected with the module 3.

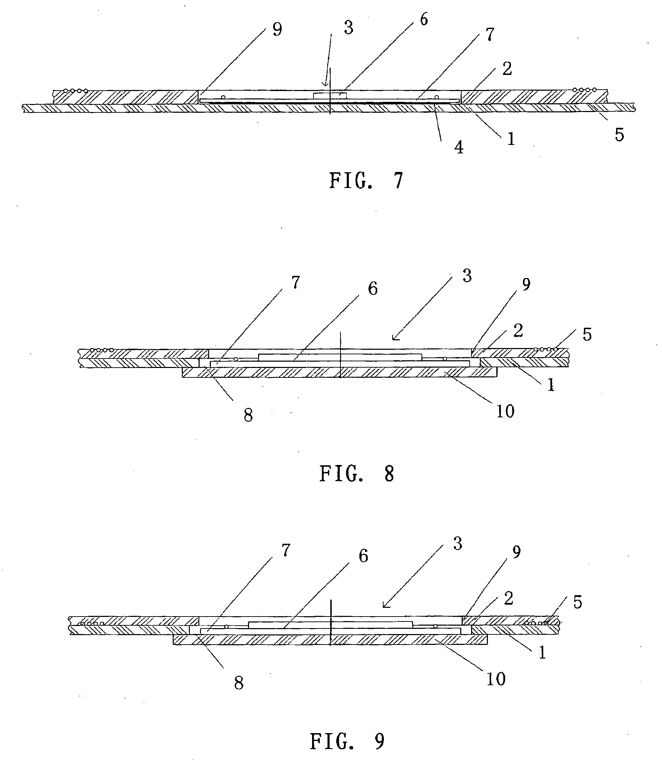

The difference between the radio frequency identification device as shown in the FIG. 3 and the radio frequency identification device as shown in the FIG. 2 is that the module 3 is FCP module. The difference between the radio frequency identification device as shown in the FIG. 7 and the radio frequency identification device as shown in the FIG. 6 is also that the module 3 is FCP module.

As shown in the FIG. 8, the radio frequency identification device of the invention comprises of module bearing substrate 1 and lead bearing substrate 2; module 3 which comprises of chip 6 and lead frame 7 is arranged on the module bearing substrate 1; the chip 6 is fixed on the middle part of the upper surface of lead frame 7, the lead frame 7 is arranged in the vacant area 8 in the middle of module bearing substrate 1; the lower surface of lead frame 7 is bonded and connected with the lower surface of module bearing substrate 1 through an adhesive tape 10; the lead coil 5 is arranged on the lead bearing substrate 2; the lead coil 5 is arranged on the upper surface of lead bearing substrate 2.

The lead coil 5 can also be arranged on the lower surface of lead bearing substrate 2 as shown in the FIG. 9; the cavity 9 containing the chip 6 is in the middle part of lead bearing substrate 2; the lower surface of lead bearing substrate 2 is connected with and sticks the upper surface of module bearing substrate 1 by adopting heat pressing or adhesive joining; or the lead bearing substrate 2 and the module bearing substrate 1 can be fixed and connected by locating plunger, the lead coil 5 is electrically connected with the module 3; the structure of other parts is the same with the structure shown in the FIG. 8.

The module bearing substrate 1 of this invention can adopt thinner materials, such as sheeting with the thickness of 0.04 to 0.05mm to bear the module. The thickness of the sheeting used for the lead bearing substrate 2 is 0.8 to 1.2 times of the thickness of the module, or the sheeting with the thickness of 0.23 to 0.28mm, hence, the entire thickness of the card can be thinned, and the automation production can be realized.

### Example 1

As shown in the FIG. 4, the steps of manufacturing method of radio frequency identification device of the invention are as follows:
1. Prepare entire module bearing substrate 1 and entire lead bearing substrate 2 respectively; set multiple vacant areas 8 on the entire module bearing substrate 1 according to the setting position; set multiple cavities 9 on the entire lead bearing substrate 2 according to the setting positions.
2. Arrange multiple lead coils 5 (4 lead coils are drawn in the FIG. 4 only as demonstration) on the entire lead bearing substrate 2 respectively, each lead coil 5 is arranged on the upper surface or lower surface of the entire lead bearing substrate 2; the method of setting lead coil 5 is to bond the pre-winded cooper coil on the entire lead bearing substrate 2 respectively; or arrange the pre-winded cooper coil in the entire lead bearing substrate 2 by adopting the method of ultrasonic welding, the lead may be lacquered wire or lead without covering of insulated paint.
3. Arrange chips 6 of multiple modules 3 in the vacant area 8 of the entire module bearing substrate 1 respectively (Four modules 3 are drawn in the FIG. 4 only as demonstration); the lead frame 7 of each module 3 is arranged in the cavity 9 respectively; the perimeter of the lower surface of the lead frame 7 is bonded and connected with the upper surface of the entire module bearing substrate 1; the UV adhesive or the hot melt adhesive or the thermosetting adhesive is filled in the vacant area 8 of entire lead bearing substrate 2 to fix module 3 and provide the preparation of filling for subsequent processes.
4. The lower surface of lead bearing substrate 2 is connected with the upper surface of module bearing substrate 1 by adopting heat pressing or adhesive joining.
5. Put the connector of each lead coil 5 on the interface of lead frame 7 of module 3; each lead coil 5 is electrically connected with corresponding chip 6 by adopting electric resistance welding or braze welding, and the radio frequency identification device as shown in the FIG. 1 or FIG. 5 can be made.

### Example 2

The steps of manufacturing method of radio frequency identification device of the invention are as follows:
1. Prepare entire module bearing substrate 1 and entire lead bearing substrate 2 respectively; set multiple cavities 9 on the entire lead bearing substrate 2 according to the setting positions.
2. Arrange multiple lead coils 5 on the entire lead bearing substrate 2 according to setting positions respectively, each lead coil 5 is arranged on the upper surface or lower surface of the entire lead bearing substrate 2; the method of setting lead coil 5 is to embed the pre-winded cooper coil in the entire lead bearing substrate 2 by adopting the method of ultrasonic welding, the lead may be lacquered wire or lead without covering of insulated paint;
3. Fix multiple modules 3 on the entire module bearing substrate 1 respectively according to the setting positions; each module 3 is arranged in the cavity 9 on the entire lead bearing substrate 2 respectively; the lower surface of the lead frame 7 of each module 3 is bonded and connected with the upper surface of entire module bearing substrate 1 respectively.
4. The lower surface of entire lead bearing substrate 2 is connected with the upper surface of entire module bearing substrate 1 by adopting heat pressing or adhesive joining.
5. Put the connector of each lead coil 5 on the interface of lead frame 7 of module 3; each lead coil 5 is electrically connected with corresponding module 3 by adopting electric resistance welding or braze welding, and the radio frequency identification device as shown in the FIG. 2 or FIG. 6 can be made.

The module 3 can be FCP module, and FCP is the abbreviation of Flip Chip Package.

### Example 3

The steps of manufacturing method of radio frequency identification device of the invention are as follows:
1. Prepare entire module bearing substrate 1 and entire lead bearing substrate 2 respectively; set multiple vacant areas 8 on the entire module bearing substrate 1 according to the setting positions; set multiple cavities 9 on the entire lead bearing substrate 2 according to the setting positions.
2. Arrange multiple lead coils 5 on the entire lead bearing substrate 2 by lead arrangement tool respectively, each lead coil 5 is arranged on the upper surface or lower surface of the entire lead bearing substrate 2; the method of setting lead coil 5 is to bond the pre-winded cooper coil on the entire lead bearing substrate 2 respectively; or arrange the pre-winded cooper coil in the entire lead bearing substrate 2 by adopting the method of ultrasonic welding, the lead may be lacquered wire or lead without covering of insulated paint.
3. Arrange the lead frames 7 of multiple modules 3 in the vacant area 8 of the entire module bearing substrate 1 respectively, and arrange the chip 6 of each module 3 in the cavity 9 respectively, then bond and connect the perimeter of the lower surface of lead frame 7 and the lower surface of the entire module bearing substrate 1 by adhesive strip; the UV adhesive or the hot melt adhesive or the thermosetting adhesive is filled in the vacant area 8 of entire lead bearing substrate 2 to fix module 3.
4. The lower surface of entire lead bearing substrate 2 is connected with and sticks the upper surface of entire module bearing substrate 1 by adopting heat pressing or adhesive joining.
5. Connect each lead coil 5 electrically with corresponding chip 6 by adopting electric resistance welding or braze welding, and the radio frequency identification device as shown in the FIG. 8 or FIG. 9 can be made.

The manufacturing method of the radio frequency identification device of this invention creatively adopts two substrates, namely the module bearing substrate 1 and lead bearing substrate 2, and creatively arranged modules on the module bearing substrate 1 and lead coil 5 on the lead bearing substrate 2 respectively; therefore, the setting work of module 3 and lead coil 5 can be carried out simultaneously; or the setting work of lead coil 5 which takes a long time can be carried out in advance; then the setting work of module 3 is carried out in time according to the client's order, and the radio frequency identification device is assembled, thus the radio frequency identification device needed by client can be produced rapidly when an order appears. The radio frequency identification device and manufacturing method of the invention has the advantages that the production efficiency can be improved greatly and the production cost can be decreased obviously; the technical proposal has outstanding substantial feature and obvious progress.

The above examples are only the descriptions of the preferred implementation way of the invention, but not the limitation of the scope of the invention. The invention is defined by the appended claims.

The manufacturing method of the radio frequency identification device of this invention and the device of this invention arranged modules on the module bearing substrate and arrange lead coil on the lead bearing substrate by using present producing means and devices respectively; therefore, the setting work of module and lead coil can be carried out simultaneously; or only by investing a few funds, the setting work of lead coil which takes a long time and comprises of low cost elements can be carried out in advance, then the setting work of module is carried out according to the client's order in time, and the radio frequency identification device is assembled, thus the radio frequency identification device needed by client can be produced rapidly when an order appears.

## Claims

1. A manufacturing method of a radio frequency identification device, the method including the steps of
1) preparing an entire module bearing substrate (1) and an entire lead bearing substrate (2) respectively; and
2) respectively arranging a plurality of lead coils (5) are on the entire lead bearing substrate (2) according to setting positions;
the method further including the steps of
3) fixing multiple modules (3) on the entire module bearing substrate (1) according to the setting positions;
4) fixing one surface of the entire module bearing substrate to one surface of the entire lead bearing substrate; and
5) electrically connecting every lead coil (5) with the corresponding module (3),
**characterized in that**
the step 1 also includes
setting multiple vacant areas (8) on the entire module bearing substrate (1) according to the setting positions and
multiple cavities (9) on the entire lead bearing substrate (2) according to the setting positions;
the multiple lead coils (5) described in step 2 are arranged on the upper surface or the lower surface of entire lead bearing substrate (2) respectively;
each module (3) described in step 3 comprises of a chip (6) and a lead frame (7),
wherein
the chip (6) is fixed on the lead frame (7);
each chip (6) is arranged in the vacant area (8) on the entire module bearing substrate (1);
each lead frame (7) is arranged in the cavity (9);
the perimeter of the lower surface of the lead frame (7) is bonded and connected with the upper surface of the module bearing substrate (1);
or wherein
each chip (6) is fixed on the upper surface of lead frame (7);
each lead frame (7) is arranged in the vacant area (8) on the module bearing substrate (1) respectively;
each chip (6) is arranged in the cavity (9);
the lower surface of lead frame (7) and the lower surface of the entire module bearing substrate (1) is connected and bonded by adhesive strip (10);
and **in that** the lower surface of lead bearing substrate (2) described in step 4 is connected with the upper surface of module bearing substrate (1) by adopting heat pressing or adhesive joining or locating plunger or ultrasonic welding.

2. The manufacturing method of the radio frequency identification device according to Claim 1, is characterized that
the method of setting lead coil (5) described in step 3 is to bond the pre-winded cooper on the entire lead bearing substrate (2) respectively; the electric connecting method in step 5 is electric resistance welding or braze welding.

3. The manufacturing method of the radio frequency identification device according to Claim 1, is characterized that
the step 1 also includes setting multiple cavities (9) on the entire lead bearing substrate (2) according to the setting positions;
the multiple lead coils (5) described in step 2 are arranged on the upper surface or the lower surface of entire lead bearing substrate (2) respectively;
in step 3, multiple modules (3) are arranged in the cavities (9) of the entire lead bearing substrate (2), and the lower surface of the lead frame (7) of multiple modules (3) is bonded and connected with the upper surface of the entire module bearing substrate (1);
in step 4, the lower surface of lead bearing substrate (2) is connected with the upper surface of module bearing substrate (1) by adopting heat pressing or adhesive joining or locating plunger or ultrasonic welding;
the electric connecting method described in step 5 is electric resistance welding or braze welding.

4. The manufacturing method of the radio frequency identification device according to any of Claims 1 to 3, is characterized that
the method of setting lead coils (5) described in 4 is to arrange the copper coil in the entire lead bearing substrate (2) by adopting ultrasonic welding; the vacant area (8) of lead bearing substrate (2) is filled with UV adhesive or the hot melt adhesive or the thermosetting adhesive.

## Patentansprüche

1. Herstellungsverfahren einer Radiofrequenz-Erkennungsvorrichtung, wobei das Verfahren folgende Schritte umfasst:
1) Herstellen jeweils eines gesamten modultragenden Substrats (1) und eines gesamten leitungstragenden Substrats (2); und
2) jeweils Anordnen einer Mehrzahl von Leitungswicklungen (5) auf dem gesamten leitungstragenden Substrat (2) gemäß Platzierungspositionen;
wobei das Verfahren ferner folgende Schritte umfasst:
3) Befestigen mehrerer Module (3) auf dem gesamten modultragenden Substrat (1) gemäß den Platzierungspositionen;
4) Befestigen einer Oberfläche des gesamten modultragenden Substrats an einer Oberfläche des gesamten leitungstragenden Substrats; und
5) elektrisches Verbinden jeder Leitungswicklung (5) mit dem entsprechenden Modul (3),
**dadurch gekennzeichnet, dass**
der Schritt 1 auch umfasst:
Platzieren mehrerer leerer Bereiche (8) auf dem gesamten modultragenden Substrat (1) gemäß den Platzierungspositionen und
mehrerer Hohlräume (9) auf dem gesamten leitungstragenden Substrat (2) gemäß den Platzierungspositionen;
die mehreren Leitungswicklungen (5), die in Schritt 2 beschrieben sind, werden jeweils auf der oberen Oberfläche oder der unteren Oberfläche des gesamten leitungstragenden Substrats (2) angeordnet;
jedes Modul (3), das in Schritt 3 beschrieben ist, umfasst einen Chip (6) und einen Leitungsrahmen (7),
wobei
der Chip (6) auf dem Leitungsrahmen (7) befestigt wird;
jeder Chip (6) in dem leeren Bereich (8) auf dem gesamten modultragenden Substrat (1) angeordnet wird;
jeder Leitungsrahmen (7) in dem Hohlraum (9) angeordnet wird;
der Umfang der unteren Oberfläche des Leitungsrahmens (7) an die obere Oberfläche des modultragenden Substrats (1) gebondet und mit dieser verbunden wird;
oder wobei
jeder Chip (6) auf der oberen Oberfläche des Leitungsrahmens (7) befestigt wird;
jeder Leitungsrahmen (7) jeweils in dem leeren Bereich (8) auf dem modultragenden Substrat (1) angeordnet wird;
jeder Chip (6) in dem Hohlraum (9) angeordnet wird;
die untere Oberfläche des Leitungsrahmens (7) und die untere Oberfläche des gesamten modultragenden Substrats (1) durch Klebestreifen (10) verbunden und gebondet werden;
und dadurch, dass die untere Oberfläche des leitungstragenden Substrats (2), die in Schritt 4 beschrieben ist, mit der oberen Oberfläche des modultragenden Substrats (1) verbunden wird, indem Heißpressen oder Klebeverbinden oder ein Positionierplunger oder Ultraschallschweißen angewendet wird.

2. Das Herstellungsverfahren der Radiofrequenz-Erkennungsvorrichtung nach Anspruch 1, ist **dadurch gekennzeichnet, dass**
das Verfahren des Leitungswicklungsplatzierens (5), das in Schritt 3 beschrieben ist, dazu dient, das vorgewickelte Kupfer jeweils auf dem gesamten leitungstragenden Substrat (2) zu bonden; das elektrische Verbindungsverfahren in Schritt 5 elektrisches Widerstandsschweißen oder Lötschweißen ist.

3. Das Herstellungsverfahren der Radiofrequenz-Erkennungsvorrichtung nach Anspruch 1, ist **dadurch gekennzeichnet, dass**
der Schritt 1 auch ein Platzieren mehrerer Hohlräume (9) auf dem gesamten leitungstragenden Substrat (2) gemäß den Platzierungspositionen umfasst;
die mehreren Leitungswicklungen (5), die in Schritt 2 beschrieben sind, jeweils auf der oberen Oberfläche oder der unteren Oberfläche des gesamten leitungstragenden Substrats (2) angeordnet werden;
in Schritt 3 mehrere Module (3) in den Hohlräumen (9) des gesamten leitungstragenden Substrats (2) angeordnet werden, und die untere Oberfläche des Leitungsrahmens (7) mehrerer Module (3) an die obere Oberfläche des gesamten modultragenden Substrats (1) gebondet und mit dieser verbunden wird;
in Schritt 4 die untere Oberfläche des leitungstragenden Substrats (2) mit der oberen Oberfläche des modultragenden Substrats (1) verbunden wird, indem Heißpressen oder Klebeverbinden oder ein Positionierplunger oder Ultraschallschweißen angewendet wird;
das elektrische Verbindungsverfahren, das in Schritt 5 beschrieben ist, elektrisches Widerstandsschweißen oder Lötschweißen ist.

4. Das Herstellungsverfahren der Radiofrequenz-Erkennungsvorrichtung nach einem der Ansprüche 1 bis 3, **dadurch gekennzeichnet, dass**
das Verfahren des Platzierens von Leitungswicklungen (5), das in 4 beschrieben ist, dazu dient, die Kupferwicklung in dem gesamten leitungstragenden Substrat (2) anzuordnen, indem Ultraschallschweißen angewendet wird; der leere Bereich (8) des leitungstragenden Substrats (2) mit UV-Klebstoff oder dem Heißschmelzklebstoff oder dem wärmehärtenden Klebstoff gefüllt wird.

## Revendications

1. Procédé pour la production d'un appareil d'identification par radiofréquence, le procédé comportant les étapes consistant à
1) préparer respectivement un substrat (1) de support d'une totalité de modules et un substrat (2) de support d'une totalité de conducteurs ; et
2) disposer respectivement une pluralité d'enroulements de conducteur (5) sur le substrat (2) de support de la totalité de conducteurs selon des positions de placement ;
le procédé comportant en outre les étapes consistant à
3) fixer de multiples modules (3) sur le substrat (1) de support de la totalité de modules selon les positions de placement ;
4) fixer une surface du substrat de support de la totalité de modules sur une surface du substrat de support de la totalité de conducteurs ; et
5) connecter électriquement chaque enroulement de conducteur (5) au module correspondant (3),
**caractérisé en ce que**
l'étape 1 comporte également
le placement de multiples zones vacantes (8) sur le substrat (1) de support de la totalité de modules selon les positions de placement et
de multiples cavités (9) sur le substrat (2) de support de la totalité de conducteurs selon les positions de placement ;
les multiples enroulements de conducteur (5) décrits dans l'étape 2 sont disposés respectivement sur la surface supérieure ou la surface inférieure du substrat (2) de support de la totalité de conducteurs ;
chaque module (3) décrit dans l'étape 3 comprend une puce (6) et un cadre de conducteur (7),
dans lequel
la puce (6) est fixée sur le cadre de conducteur (7) ;
chaque puce (6) est disposée dans la zone vacante (7) sur le substrat (1) de support de la totalité de modules ;
chaque cadre de conducteur (7) est disposé dans la cavité (9) ;
le périmètre de la surface inférieure du cadre de conducteur (7) est lié et connecté à la surface supérieure du substrat (1) de support de modules ;
ou dans lequel
chaque puce (6) est fixée sur la surface supérieure du cadre de conducteur (7) ;
chaque cadre de conducteur (7) est disposé respectivement dans la zone vacante (8) sur le substrat (1) de support de la totalité de modules ;
chaque puce (6) est disposée dans la cavité (9) ;
la surface inférieure du cadre de conducteur (7) et la surface inférieure du substrat (1) de support de la totalité de modules sont connectées et liées par une bande adhésive (10) ;
et **en ce que** la surface inférieure du substrat (2) de support de conducteurs décrite dans l'étape 4 est connectée à la surface supérieure du substrat (1) de support de modules par pressage à chaud ou liaison adhésive ou une goupille de verrouillage ou soudage par ultrasons.

2. Procédé pour la production de l'appareil d'identification par radiofréquence selon la revendication 1, **caractérisé en ce que**
le procédé de placement de l'enroulement de conducteur (5) décrit dans l'étape 3 consiste à lier le cuivre pré-enroulé respectivement sur le substrat (2) de support de la totalité de conducteurs ; le procédé de connexion électrique de l'étape 5 est le soudage par résistance électrique ou le soudobrasage.

3. Procédé pour la production de l'appareil d'identification par radiofréquence selon la revendication 1, **caractérisé en ce que**
l'étape 1 comporte également le placement de multiples cavités (9) sur le substrat (2) de support de la totalité de conducteurs selon les positions de placement ;
les multiples enroulements de conducteur (5) décrits dans l'étape 2 sont disposés respectivement sur la surface supérieure ou la surface inférieure du substrat (2) de support de la totalité de conducteurs ;
dans l'étape 3, de multiples modules (3) sont disposés dans les cavités (9) du substrat (2) de support de la totalité de conducteurs, et la surface inférieure du cadre de conducteur (7) des multiples modules (3) est liée et connectée à la surface supérieure du substrat (1) de support de la totalité de modules ;
dans l'étape 4, la surface inférieure du substrat (2) de support de conducteurs est connectée à la surface supérieure du substrat (1) de support de modules par pressage à chaud ou liaison adhésive ou une goupille de verrouillage ou soudage par ultrasons ;
le procédé de connexion électrique décrit dans l'étape 5 est le soudage par résistance électrique ou le soudobrasage.

4. Procédé pour la production de l'appareil d'identification par radiofréquence selon une des revendications 1 à 3, **caractérisé en ce que**
le procédé de placement des enroulements de conducteur (5) décrit en 4 consiste à disposer l'enroulement de cuivre dans le substrat (2) de support de la totalité de conducteurs par soudage par ultrasons ; la zone vacante (8) du substrat (2) de support de conducteurs est remplie d'adhésif UV ou de l'adhésif thermofusible ou de l'adhésif thermodurcissable.
